# EUROPÄISCHE PATENTANMELDUNG

(11) **EP 3 653 457 A1**
(43) Veröffentlichungstag der Anmeldung: **20.05.2020**
(21) Anmeldenummer: 19206800.5
(22) Anmeldetag: 04.11.2019
(51) Int. Cl.: B60T 8/1755

(54) **BREMSSYSTEM FÜR EIN KRAFTFAHRZEUG, KRAFTFAHRZEUG MIT EINEM DERARTIGEN BREMSSYSTEM SOWIE VERFAHREN ZUM BETREIBEN EINES DERARTIGEN BREMSSYSTEMS**

(30) Priorität: 16.11.2018 DE 102018219652
(71) Anmelder: Volkswagen AG, 38440 Wolfsburg (DE)
(72) Erfinder: WITTE, Bastian, 38179 Groß Schwülper (DE)

(57) **Zusammenfassung**

Die Erfindung betrifft ein Bremssystem (20) für ein Kraftfahrzeug (10), ein Kraftfahrzeug (10) mit einem derartigen Bremssystem (20) sowie ein Verfahren zum Betreiben eines derartigen Bremssystems (20). Das Bremssystem (20) weist zwei Steuereinheiten (27, 28) auf, wobei die jeweilige Steuereinheit (27, 28) dazu ausgelegt ist, einen jeweiligen Bremskreis des Bremssystems (20) anzusteuern, der zwei von vier Betriebsbremsen (21, 22, 23, 24) und eine von zwei elektrischen Feststellbremsen (25, 26) des Bremssystems (20) umfasst. Bei einem Defekt in einem der Bremskreise ist die Steuereinheit (27, 28) des anderen Bremskreises dazu ausgelegt ist, mittels Ansteuerns der jeweiligen Bremsen (21, 22, 23, 24, 25, 26) dieses anderen Bremskreises eine Gespannstabilisierung eines Gespanns, umfassend das Kraftfahrzeug (10) und einen mit dem Kraftfahrzeug gekoppelten Anhänger (12), durchzuführen; und/oder das Kraftfahrzeug (10) bei einem Defekt an einer Lenkung (40) des Kraftfahrzeugs (10) in Abhängigkeit von einem Lenkbefehl einer Steuereinrichtung (42) zum autonomen Fahren zu lenken.

## Beschreibung

Die Erfindung betrifft ein Bremssystem für ein Kraftfahrzeug, ein Kraftfahrzeug mit einem derartigen Bremssystem sowie ein Verfahren zum Betreiben eines derartigen Bremssystems.

Ein Kraftfahrzeug weist üblicherweise an jedem seiner Räder jeweilige angeordnete hydraulische Bremsen auf und ist heutzutage zusätzlich mit elektromechanischen Parkbremsen ausgestattet. Die elektromechanischen Parkbremsen sind üblicherweise an der Hinterachse und somit an den beiden Hinterrädern des Kraftfahrzeugs angeordnet. Hierbei betätigt beispielsweise ein Elektromotor ein selbsthemmendes Rotation-Translation-Getriebe, wie zum Beispiel eine Spindel, und drückt damit den Bremsbelag der Parkbremse gegen eine Bremsscheibe. Derartige elektromechanische Parkbremsen können beispielsweise derart ausgelegt sein, dass sie für jedes Rad des Kraftfahrzeugs individuell ansteuerbar sind. Allerdings sollten Parkbremsen während einer Fahrt des Kraftfahrzeugs nur im Notfall verwendet werden. Denn beispielsweise durch die Selbsthemmung des Getriebes kann es im Fehlerfall, wie beispielsweise bei einem plötzlichen Ausfall der elektrischen Energieversorgung, passieren, dass ein aufgebautes Bremsmoment nicht wieder reduziert werden kann und das betroffene Rad festgebremst verbleibt.

In der EP 2 977 282 A1 wird ein Bremssystem beschrieben, das zwei Bremskreise umfasst. Diese beiden Bremskreise umfassen jeweils zwei von insgesamt vier hydraulischen Bremsen des Kraftfahrzeugs, die jeweils an diagonal zueinander angeordneten Rädern des Kraftfahrzeugs angeordnet sind. Ein erster Bremskreis umfasst beispielsweise die hydraulischen Bremsen, die an dem vorderen linken Rad sowie an dem hinteren rechten Rad des Kraftfahrzeugs angeordnet sind, wohingegen der zweite Bremskreis die jeweiligen hydraulischen Bremsen, die einem vorderen rechten Rad und einem hinteren linken Rad zugeordnet sind, umfasst. Jedem dieser beiden Bremskreise wird nun zudem eine von zwei elektrischen Feststellbremsen zugeordnet, die bevorzugt an einem der beiden Räder der Hinterachse des Kraftfahrzeugs angeordnet ist. Hierbei wird jedem Bremskreis diejenige der beiden Feststellbremsen zugeordnet, die an dem Hinterrad angeordnet ist, an dem bisher keine hydraulische Bremse des Bremskreislaufes angeordnet ist. Somit können mit jedem der beiden Bremskreise jeweils die Bremsen an drei Rädern angesteuert werden. Fällt nun beispielsweise einer der beiden Bremskreise aus, zum Beispiel aufgrund eines Defekts, so kann ein diesem defekten Bremskreis zugeordnetes Hinterrad des Kraftfahrzeugs weiterhin abgebremst werden, und zwar entweder mit der entsprechenden hydraulischen Bremse oder mit der elektrischen Feststellbremsen des anderen nicht defekten Bremskreislaufs.

In der DE 10 2014 214 378 A1 wird ein Bremssystem für ein Kraftfahrzeug beschrieben, das, ähnlich wie das in der EP 2 977 282 A1 beschriebene Bremssystem, zwei voneinander getrennte Bremskreise aufweist, die jedoch lediglich jeweils zwei hydraulische Bremsen und keine elektrischen Feststellbremsen aufweisen.

In der DE 10 2013 017 688 B4 wird ein Kraftfahrzeug mit mehreren Rädern beschrieben, denen jeweils wenigstens eine hydraulisch betätigbare Bremse zugeordnet ist. Diese Bremsen sind zwei separaten hydraulischen Bremskreisen zugeordnet, wobei beide Bremskreise über einen gemeinsamen Bremskraftverstärker bedienbar und über eine dem Bremskraftverstärker nachgeschaltete Ventileinheit separat zuschaltbar sind. Des Weiteren weist das Kraftfahrzeug parallel zu dem ersten und zweiten Bremskreis einen dritten und vierten Bremskreis auf, in welchen jeweils eine identische Ventilbaugruppe mit zugeordneter Steuerungseinrichtung vorgesehen ist. Dieser dritte und vierte Bremskreis sind bei einer Störung des ersten und/oder zweiten Bremskreises zuschaltbar.

In der DE 10 2016 221 444 A1 wird eine elektronische schlupfregelbare Bremsanlage für ein Kraftfahrzeug beschrieben. Diese weist zwei Bremskreise auf, die parallel aufgeteilt sind, sodass einer der Bremskreise die Radbremsen der Vorderachse und der jeweils andere Bremskreis die Radbremsen der Hinterachse umfasst.

Es ist die Aufgabe der Erfindung, eine Lösung bereitzustellen, mittels der bei einem Ausfall von Teilen eines Bremssystems eines Kraftfahrzeugs ein Fahrverhalten des Kraftfahrzeugs derart beeinflusst werden kann, dass das Kraftfahrzeug auf einer gewünschten Fahrspur verbleibt.

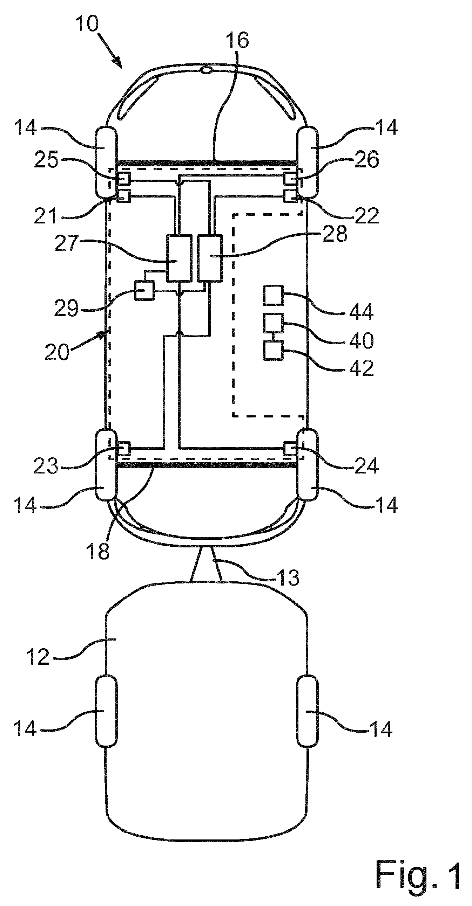

Diese Aufgabe wird durch die Gegenstände der unabhängigen Patentansprüche gelöst. Vorteilhafte Ausgestaltungen mit zweckmäßigen und nicht trivialen Weiterbildungen der Erfindung sind in den abhängigen Ansprüchen, der folgenden Beschreibung und der Figur angegeben.

Der Erfindung liegt die Erkenntnis zugrunde, dass für einen die Fahrdynamik beeinflussenden Eingriff mittels eines Bremssystems, beispielsweise bei einer kurzzeitig vorliegenden Notfallsituation, es sinnvoll ist, elektrische Bremsen, wie elektromechanischen Parkbremsen, an der Vorderachse des Kraftfahrzeugs zu montieren. Denn Bremseingriffe, beispielsweise zur Fahrstabilisierung sowie zur Fahrdynamikbeeinflussung, erfolgen üblicherweise am kurvenäußeren Rand der Vorderachse. Schleudert ein Fahrzeug beispielsweise nach links, dann wird kurzzeitig nur mit der am vorderen rechten Rad angeordneten Bremse gebremst.

Das erfindungsgemäße Bremssystem für ein Kraftfahrzeug weist vier jeweils einem Rad des Kraftfahrzeugs zugeordnete Betriebsbremsen, zwei jeweiligen Rädern einer Vorderachse des Kraftfahrzeugs zugeordnete elektrische Feststellbremsen sowie zwei Steuereinheiten auf. Als Bremse im Sinne der Erfindung ist eine Vorrichtung zu verstehen, mittels derer eine Bewegungsenergie eines der Räder des Kraftfahrzeugs in eine Wärmeenergie umgewandelt wird, wobei die Bewegungsenergie abgebaut wird. Dadurch wird eine Rotation des Rades gebremst. Die vier den jeweiligen Rädern zugeordneten Betriebsbremsen sind bevorzugt als hydraulisch betätigte Bremsen ausgebildet. Beispielsweise können die Betriebsbremsen als Trommelbremsen oder Scheibenbremsen ausgebildet sein. Die beiden den jeweiligen Rädern der Vorderachse zugeordneten elektrischen Feststellbremsen sind beispielsweise als elektromechanische Parkbremsen, das heißt als elektrische betätigte Bremsen, ausgebildet. Die jeweiligen Steuereinheiten sind nun dazu ausgelegt, einen jeweiligen Bremskreis des Bremssystems anzusteuern. Dieser jeweilige Bremskreis umfasst zwei der Betriebsbremsen, zum Beispiel zwei hydraulische Bremsen, und eine elektrische Feststellbremse, wobei jede der Bremsen des Bremssystems von jeweils genau einer der zwei Steuereinheiten angesteuert wird. Es ist also möglich, dass beispielsweise der erste Bremskreis des Bremssystems die jeweiligen hydraulischen Bremsen, die an dem vorderen linken Rad sowie am hinteren rechten Rad angeordnet sind, umfasst, sowie die elektrische Feststellbremse, die dem vorderen rechten Rad des Kraftfahrzeugs zugeordnet ist. Demgegenüber umfasst der zweite Bremskreis des Bremssystems zum Beispiel die jeweiligen hydraulischen Bremsen, die an einem vorderen rechten und einem hinteren linken Rad des Kraftfahrzeugs angeordnet sind, sowie die elektrische Feststellbremse, die dem vorderen linken Rad zugeordnet ist. Derartige Bremskreise werden zum Beispiel in der EP 2 977 282 A1 impliziert.

Bei einem Defekt an einem der Bremskreise des Bremssystems ist die Steuereinheit des anderen Bremskreises dazu ausgelegt, mittels Ansteuern der jeweiligen Bremsen des jeweils anderen Bremskreises, das heißt mittels der zwei jeweiligen Betriebsbremsen und der jeweiligen elektrischen Feststellbremse, die zwei folgenden Funktionen durchzuführen: Zum einen ist sie dazu ausgelegt, mittels Ansteuern der jeweiligen Bremsen, eine Gespannstabilisierung eines Gespanns durchzuführen, wobei dieses Gespann das Kraftfahrzeug und einen mit dem Kraftfahrzeug gekoppelten Anhänger umfasst. Bei einer Gespannstabilisierung wird mittels gezielter Eingriffe zumindest in das Bremssystem des Kraftfahrzeugs und gegebenenfalls auch in ein Motormanagement des Kraftfahrzeugs das Gespann beruhigt und ein Ausbrechen des Anhängers verhindert. Hierfür wird frühzeitig mittels einer dazu ausgelegten Sensoreinheit des Kraftfahrzeugs erkannt, dass eine Instabilität des mitgeführten Anhängers, das heißt des Anhängers, der mit dem Kraftfahrzeug gekoppelt ist, besteht. Eine derartige Instabilität kann beispielsweise durch eine nicht an einen Fahrspurverlauf angepasste Geschwindigkeit des Gespanns oder auf einer rutschigen Fahrbahnoberfläche auftreten. Die Fahrdynamik des Gespanns aus Kraftfahrzeug und Anhänger kann somit mittels entsprechendes Ansteuerns des noch funktionsfähigen Bremskreises des Bremssystems derart positiv beeinflusst werden, dass ein schlingerndes Kraftfahrzeug-Anhänger-Gespann wieder stabilisiert werden kann. Hierdurch wird erreicht, dass das zuvor zu pendeln begonnene Gespann auf einer vorgegebenen Fahrspur verbleibt.

Zusätzlich oder alternativ dazu ist zum anderen die Steuereinheit des anderen Bremskreises, der keinen Defekt aufweist, dazu ausgelegt, mittels Ansteuern der jeweiligen Bremsen des anderen Bremskreises das Kraftfahrzeug bei einem Defekt einer Lenkung des Kraftfahrzeugs in Abhängigkeit von einem Lenkbefehl einer Steuereinrichtung zum autonomen Fahren zu lenken. Mittels des Bremssystems kann somit eine sogenannte Lenkbremse realisiert werden. Hierbei wird durch einseitiges Bremsen an den Rädern das Kraftfahrzeug gelenkt, was insbesondere bei einem Kraftfahrzeug mit positivem Lenkrollradius ermöglicht, dass mit dem Bremssystem in einer Notfallsituation, das heißt beispielsweise bei einem Defekt an der Lenkung des Kraftfahrzeugs, das Kraftfahrzeug weiter gelenkt werden kann. Das Bremssystem dient hiermit sozusagen als Notfallebene für die Lenkung des Kraftfahrzeugs.

Wird beispielsweise das rechte Vorderrad des Kraftfahrzeugs angebremst und das Lenkrad dabei von einem Fahrer des Kraftfahrzeugs losgelassen, dann wird das Kraftfahrzeug weiterhin nach rechts gelenkt. Dieser Effekt tritt allerdings nur dann auf, wenn das Kraftfahrzeug einen positiven Lenkrollradius aufweist. Als Lenkrollradius wird allgemeine der Abstand zwischen einem Berührungspunkt einer Lenkachse mit einer Fahrbahnebene und einem Radaufstandspunkt bezeichnet. Wird ein Kraftfahrzeug auf einer seiner Seiten stärker abgebremst, so steuert es zu dieser Seite, an der die größere Bremskraft angreift. Bei positivem Lenkrollradius drücken die Bremskräfte die Räder daher nach außen. Das Rad mit der größeren Bremskraft wird dadurch weiter nach außen geschwenkt und das Fahrzeug zusätzlich in Richtung der stärker gebremsten Seite gelenkt. Je stärker in einer derartigen Situation gebremst wird, desto größer wird auch der Lenkwinkel in diese Richtung. Hierdurch wird es beispielsweise möglich, dass lediglich durch Ansteuern einer Bremse beispielsweise mit leicht reduzierter Fahrgeschwindigkeit ein Rundkurs vollständig abgefahren werden kann. Insbesondere bei automatischen Fahrten, das heißt, wenn das Kraftfahrzeug mittels entsprechender Lenkbefehle der Steuereinrichtung zum autonomen Fahren gelenkt wird, kann somit mittels des Bremssystems eine zusätzliche Rückfallebene im Falle einer defekten Lenkung realisiert werden. Hierdurch ist mit besonders geringen Kosten mittels des bereits vorhandenen Bremssystems im Kraftfahrzeug eine alternative Lenkung des Kraftfahrzeugs möglich.

Da zudem die beschriebene Ansteuerung der Bremsen nur dann erfolgt, wenn bereits ein Defekt in einem der Bremskreise aufgetreten ist, eignet sich diese Funktion des Bremssystems als Lenkbremse mittels entsprechenden Ansteuerns eines der beiden Bremskreise des Bremssystems besonders in Situationen, in denen bereits mehrere Teile des Kraftfahrzeugs nicht mehr funktionsfähig sind. Tritt kein Defekt in einem der Bremskreise des Bremssystems auf, würde das Bremssystem das Kraftfahrzeug, beispielsweise gesteuert von einer Hauptsteuereinheit des Bremssystems, mittels Ansteuern beispielsweise aller vier hydraulischen Bremsen des Kraftfahrzeugs bremsen und/oder fahrstabilisierende und fahrdynamikbeeinflussende Maßnahmen durchführen.

Wird nun beispielsweise im ersten Bremskreis ein Defekt festgestellt, da beispielsweise in einer hydraulischen Bremse ein zu geringer Hydraulikdruck herrscht, zum Beispiel aufgrund einer defekten Hydraulikpumpe, einer Leckage, einem Stromausfall, einem permanent geschlossenen Einlassventil oder einem permanent geöffneten Auslassventil innerhalb des Bremskreises, kann es sein, dass dieser erste Bremskreis nicht mehr funktionsfähig ist. Nun kann mittels der Bremsen des zweiten Bremskreises, das heißt zum Beispiel mit der hydraulischen Bremse, die dem vorderen rechten Rad zugeordnet ist, sowie der dem vorderen linken Rad zugeordneten elektrischen Feststellbremse sowohl eine Gespannstabilisierung eines Gespanns als auch eine Lenkbremse, das heißt ein Lenken des Kraftfahrzeugs gemäß der Lenkbefehle der Steuereinrichtung zum autonomen Fahren bei einer defekten Lenkung realisiert werden. Mittels Ansteuern der jeweiligen Bremsen ist es somit möglich, dass das Kraftfahrzeug derart angesteuert wird, dass dieses auf einer vorgegebenen Fahrspur verbleibt. Eine Fahrtrajektorie des Kraftfahrzeugs verbleibt somit in einem vorgegebenen Fahrtrajektorienbereich. Durch ein gleichzeitig mögliches Zusammenspiel der Betriebsbremsen, das heißt zum Beispiel der hydraulischen Bremsen, und den elektrischen Feststellbremsen des Kraftfahrzeugs an der Vorderachse kann somit eine Fahrdynamikbeeinflussung durchgeführt werden.

Alternativ zu der Ansteuerung der jeweiligen Bremsen des anderen Bremskreises gemäß Lenkbefehlen der Steuereinrichtung zum autonomen Fahren kann bei einer Fahrerfahrt vorgesehen sein, dass das Kraftfahrzeug gemäß Lenkradbewegungen eines Fahrers, die beispielsweise trotz Defekt an der Lenkung weiter erfasst werden, entsprechende Lenkbefehle ermittelt werden, gemäß den das Kraftfahrzeug mittels entsprechendem Ansteuern der jeweiligen Bremsen gelenkt wird.

In einer vorteilhaften Ausgestaltungsform der Erfindung ist es vorgesehen, dass die Steuereinheit des anderen Bremskreises dazu ausgelegt ist, die jeweiligen Bremsen in Abhängigkeit von einem Steuerbefehl von einem elektronischen Stabilitätsprogramm des Kraftfahrzeugs anzusteuern. Ein elektronisches Stabilitätsprogramm (ESP), das häufig auch als Fahrdynamikregelung bezeichnet wird, ist ein elektronisch gesteuertes Fahrerassistenzsystem für ein Kraftfahrzeug, das durch gezieltes Abbremsen einzelner Räder einem Ausbrechen des Kraftfahrzeug entgegenwirkt. Zusätzlich zu der spezifischen Gespannstabilisierung eines Gespanns kann somit mittels des beschriebenen Bremssystems zudem eine weitere Fahrstabilitätsfunktion realisiert werden, wie sie vom elektronischen Stabilitätsprogramm vorgesehen ist. Sollte das Kraftfahrzeug beispielsweise in einer Rechtskurve schleudern, dann kann zur Fahrstabilisierung zum Beispiel ein Bremseingriff mittels der hydraulischen Bremse, die zum Beispiel am vorderen linken Rad angeordnet ist, erfolgen. Sollte das Kraftfahrzeug jedoch in einer Linkskurve schleudern, dann kann zur Fahrstabilisierung zum Beispiel ein Bremseingriff mittels der elektrischen Feststellbremse, die zum Beispiel am vorderen rechten Rad angeordnet ist, erfolgen. In einer derartigen Situation läuft der Elektromotor der elektrischen Feststellbremse an, drückt den Bremsbelag mittels des Rotations-Translations-Getriebes an die Bremsscheibe und baut so ein Bremsmoment am vorderen rechten Rad auf. Hierdurch wird bei einem Defekt an einem der Bremskreise eine besonders zuverlässige Rückfallebene realisiert, sodass mittels der Bremsen des Bremssystems erreicht werden kann, dass das Kraftfahrzeug nicht nur in seiner Fahrspur verbleibt, sondern in seiner Fahrt zusätzlich stabilisiert wird.

Alternativ oder zusätzlich dazu kann die Steuereinheit des anderen Bremskreises dazu ausgelegt sein, bei einem Defekt im ersten der Bremskreise mittels Ansteuern der jeweiligen Bremsen des anderen Bremskreises eine Giermomentaufbauverzögerung, einen Abstandstempomat und/oder eine Antriebsschlupfregelung (ASR) durchzuführen.

Erfindungsgemäß ist zudem ein Kraftfahrzeug mit dem oben beschriebenen Bremssystem vorgesehen. Die im Zusammenhang mit dem erfindungsgemäßen Bremssystem vorgestellte bevorzugte Ausgestaltung und ihre Vorteile gelten entsprechend, soweit anwendbar, für das erfindungsgemäße Kraftfahrzeug.

In einer vorteilhaften Ausgestaltungsform des erfindungsgemäßen Kraftfahrzeugs ist es vorgesehen, dass das Kraftfahrzeug zum autonomen Fahren ausgelegt ist. Das Kraftfahrzeug weist dafür eine Steuereinrichtung zum autonomen Fahren auf, die zumindest dazu ausgelegt ist, mittels eines Lenkbefehls eine Lenkung des Kraftfahrzeugs anzusteuern. Zumindest eine Lenkung des Kraftfahrzeugs kann somit vollautomatisch, das heißt ohne Zutun eines Fahrers des Kraftfahrzeugs durchgeführt werden. Für einen autonomen Antrieb und ein autonomes Bremsen des Kraftfahrzeugs können beispielsweise weiteren Steuereinrichtungen zum autonomen Fahren im Kraftfahrzeug vorgesehen sein.

Mittels des Bremssystems für ein derartiges Kraftfahrzeug ist es somit möglich, dass bei einem Defekt in einem der Bremskreise die Steuereinheit des anderen Bremskreises dazu ausgelegt ist, mittels Ansteuern der jeweiligen Bremsen dieses anderen Bremskreises das Kraftfahrzeug bei einem zusätzlichen Defekt in der Lenkung des Kraftfahrzeugs in Abhängigkeit von dem Lenkbefehl der Steuereinrichtung zum autonomen Fahren zu lenken. Dieses Kraftfahrzeug verfügt somit über eine weitere Rückfallebene bei einem Ausfall der Lenkung, da dann mit einer Lenkbremse realisierbar ist, dass das Kraftfahrzeug soweit möglich in einer aktuellen Fahrspur beziehungsweise auf einer aktuellen Fahrtrajektorie verbleibt beziehungsweise sich nur minimal von dieser entfernt.

In weiteren vorteilhaften Ausgestaltungsform des erfindungsgemäßen Kraftfahrzeugs ist es vorgesehen, dass das Kraftfahrzeug an einer lenkbaren Vorderachse einen positiven Lenkrollradius aufweist. Zumindest die Räder der Vorderachse sind also derart seitlich positioniert, dass sich ein positiver Lenkrollradius ergibt. Der Lenkrollradius, das heißt der Abstand zwischen dem Berührungspunkt der Lenkachse mit der Fahrbahnebene und dem Radaufstandspunkt, liegt also innerhalb einer Spurweite des Kraftfahrzeugs. Generell beeinflusst der Lenkrollradius, der auch als Lenkrollhalbmesser bezeichnet wird, die Größe eines Drehmoments am Lenkrad. Ein kleiner Lenkrollradius entlastet das Lenkgestänge, da das Drehmoment aus Lenkrollradius und Reibkraft im Radaufstandspunkt kleiner ist als bei einem größeren Lenkrollradius. Ein Kraftfahrzeug mit positivem Lenkrollradius ist daher besonders dazu geeignet, mittels Ansteuern einzelner Bremsen des Kraftfahrzeugs eine Lenkbremse zu realisieren.

Erfindungsgemäß ist zudem ein Verfahren zum Betreiben des oben beschriebenen Bremssystems vorgesehen, wobei, falls einer der zwei Bremskreise des Bremssystems einen Defekt aufweist, die Steuereinheit des jeweiligen anderen Bremskreises die jeweiligen Bremsen des anderen Bremskreises, das heißt die jeweiligen Betriebsbremsen und die jeweilige elektrische Feststellbremse, ansteuert. Hierbei wird eine Gespannstabilisierung eines Gespanns umfassend das Kraftfahrzeug und einen mit dem Kraftfahrzeug gekoppelten Anhänger durchgeführt und/oder das Kraftfahrzeug bei einem Defekt an einer Lenkung des Kraftfahrzeugs in Abhängigkeit von einem Lenkbefehl einer Steuereinrichtung zum autonomen Fahren gelenkt. Die im Zusammenhang mit dem erfindungsgemäßen Bremssystem sowie dem erfindungsgemäßen Kraftfahrzeug vorgestellten bevorzugten Ausgestaltungen und deren Vorteile gelten entsprechend, soweit anwendbar, für das erfindungsgemäße Verfahren zum Betreiben des Bremssystems.

Die Erfindung stellt auch zwei Steuereinheiten für die jeweiligen Bremskreise des Bremssystems bereit. Diese Steuereinheiten weisen jeweils eine Prozessoreinrichtung auf, die dazu eingerichtet ist, eine Ausführungsform des erfindungsgemäßen Verfahrens durchzuführen. Die Prozessoreinrichtung kann hierzu zumindest einen Mikroprozessor oder zumindest einen Mikrocontroller aufweisen. Des Weiteren kann die jeweilige Prozessoreinrichtung einen Programmcode aufweisen, der dazu eingerichtet ist, bei Ausführen durch die Prozessoreinrichtung die Ausführungsform des erfindungsgemäßen Verfahrens durchzuführen. Der Programmcode kann im Datenspeicher der Prozessoreinrichtung gespeichert sein.

Im Folgenden ist ein Ausführungsbeispiel der Erfindung beschrieben. Hierzu zeigt die einzige Figur (Fig.) eine schematische Darstellung eines Kraftfahrzeugs mit einem Bremssystem.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In der einzigen Fig. sind funktionsgleiche Elemente jeweils mit denselben Bezugszeichen versehen.

In der Fig. ist ein Kraftfahrzeug 10 skizziert, das mit einem Anhänger 12 gekoppelt ist. Das Kraftfahrzeug 10 und der Anhänger 12 bilden somit ein Gespann. Die Kopplung zwischen dem Kraftfahrzeug 10 und dem Anhänger 12 erfolgt über eine Anhängerkupplung 13. Das Kraftfahrzeug 10 weist vier Räder 14 auf, zwei an einer Vorderachse 16 und zwei an einer Hinterachse 18. Das Kraftfahrzeug 10 umfasst zudem eine Lenkung 40, die dazu ausgelegt ist, das Kraftfahrzeug 10 zu lenken, das heißt entsprechende Radeinschlagwinkel der Räder 14 anzusteuern. Diese Lenkung 40 wird hierbei von einer Steuereinrichtung 42 angesteuert, die zum autonomen Fahren ausgelegt ist. Das Kraftfahrzeug 10 ist somit ein Kraftfahrzeug 10, mit dem eine autonome Fahrt möglich ist, das heißt eine Fahrt ohne manuelle Fahrbefehle eines Fahrers des Kraftfahrzeugs 10. Das Kraftfahrzeug 10 zeichnet sich zudem dadurch aus, dass zumindest die lenkbare Vorderachse 16 des Kraftfahrzeugs 10 einen positiven Lenkrollradius aufweist. Die Räder 14 an der Vorderachse 16 sind somit entsprechend hinsichtlich Reifen und Felgen gewählt und derart am Kraftfahrzeug 10 angeordnet, dass das Kraftfahrzeug 10 zumindest dort einen positiver Lenkrollradius aufweist.

Das Kraftfahrzeug 10 weist ein Bremssystem 20 auf, wobei das Bremssystem 20 vier jeweils einem der Räder 14 des Kraftfahrzeugs 10 zugeordnete Betriebsbremsen 21, 22, 23, 24, die in diesem Ausführungsbeispiel als hydraulische Bremsen 21, 22, 23 und 24 ausgebildet sind, sowie zwei jeweiligen Rädern 14 der Vorderachse 16 zugeordnete elektrische Feststellbremsen 25 und 26 aufweist. Hierbei ist am Rad 14 vorne links die hydraulische Bremse 21, am Rad 14 vorne rechts die hydraulische Bremse 22, am Rad 14 hinten links die hydraulische Bremse 23 und am Rad 14 hinten rechts die hydraulische Bremse 24 angeordnet. Die elektrische Feststellbremse 25 ist dem Rad 14 vorne links zugeordnet, wohingegen die elektrische Feststellbremse 26 dem Rad 14 vorne rechts zugeordnet ist. Die beiden elektrischen Feststellbremsen 25 und 26 sind somit jeweiligen Rädern 14 der Vorderachse 16 des Kraftfahrzeugs 10 zugeordnet.

Zudem umfasst das Bremssystem 20 eine Hauptsteuereinheit 29 sowie zwei Steuereinheiten 27 und 28. Die jeweiligen Steuereinheiten 27, 28 sind jeweils dazu ausgelegt, einen jeweiligen Bremskreis des Bremssystems 20 anzusteuern. Der jeweilige Bremskreis umfasst zwei der hydraulischen Bremsen 21, 22, 23, 24 und eine der elektrischen Feststellbremsen 25, 26. Hierbei ist jeder der Bremsen 21 bis 26 des Bremssystems 20 von jeweils genau einer der zwei Steuereinheiten 27, 28 ansteuerbar. Der erste Bremskreis umfasst hierbei die Steuereinheit 27 sowie die hydraulischen Bremsen 21 und 24 sowie die elektrische Feststellbremse 26. Demgegenüber umfasst der zweite Bremskreis die Steuereinheit 28 sowie die hydraulischen Bremsen 22 und 23 sowie die elektrische Feststellbremse 25.

Bei einem Defekt, beispielsweise im ersten Bremskreis, ist die Steuereinheit 28 des anderen Bremskreises, das heißt des zweiten Bremskreises, dazu ausgelegt, mittels Ansteuern der jeweiligen Bremsen 22, 23 und 25 des zweiten Bremskreises eine Gespannstabilisierung des Gespanns, umfassend das Kraftfahrzeug 10 und den mit dem Kraftfahrzeug 10 gekoppelten Anhänger 12, durchzuführen und/oder das Kraftfahrzeug 10 bei einem Defekt an der Lenkung 40 des Kraftfahrzeugs 10 in Abhängigkeit mit einem Lenkbefehl der Steuereinrichtung 42 zum autonomen Fahren zu lenken. Analog dazu, ist die Steuereinheit 27 des ersten Bremskreises dazu ausgelegt, bei einem Defekt in zweiten Bremskreis mittels Ansteuern der jeweiligen Bremsen 21, 24 und 26 des ersten Bremskreises eine Gespannstabilisierung des Gespanns durchzuführen und/oder das Kraftfahrzeug 10 bei einem Defekt an der Lenkung 40 des Kraftfahrzeugs 10 in Abhängigkeit mit einem Lenkbefehl der Steuereinrichtung 42 zum autonomen Fahren zu lenken. Wenn kein Defekt in einem der zwei Bremskreise besteht, werden die vier hydraulischen Bremsen 21, 22, 23, 24 sowie gegebenenfalls die zwei elektrischen Feststellbremsen 25, 26, die typischerweise als Parkbremsen dienen, von der Hauptsteuereinheit 29 des Bremssystems 20 angesteuert.

Die Steuereinheit 28 des zweiten Bremskreises ist zudem dazu ausgelegt, die jeweiligen Bremsen 22, 23 und 25 in Abhängigkeit von einem Steuerbefehl von einem elektronischen Stabilitätsprogramm 44 des Kraftfahrzeugs 10 anzusteuern. Analog dazu ist die Steuereinheit 27 des ersten Bremskreises dazu ausgelegt, die jeweiligen Bremsen 21, 24 und 26 in Abhängigkeit von einem Steuerbefehl von dem elektronischen Stabilitätsprogramm 44 des Kraftfahrzeugs 10 anzusteuern, falls ein Defekt im zweiten Bremskreis aufgetreten ist.

Insgesamt zeigt das Beispiel, wie mit dem erfindungsgemäßen Bremssystem 20 für ein Kraftfahrzeug 10 erreicht werden kann, dass dessen Fahrdynamik derart beeinflusst wird, dass das Kraftfahrzeug 10 in einer Fahrspur verbleibt und beispielsweise auch bei einer Fahrt mit dem Anhänger 12 bei pendelndem Gespann in dieser Spur verbleibt.

### Bezugszeichenliste

- 10: Kraftfahrzeug
- 12: Anhänger
- 13: Anhängerkupplung
- 14: Rad
- 16: Vorderachse
- 18: Hinterachse
- 20: Bremssystem
- 21, 22, 23, 24: Betriebsbremsen, hydraulische Bremsen
- 25, 26: elektrische Feststellbremsen
- 27, 28: Steuereinheit
- 29: Hauptsteuereinheit
- 40: Lenkung
- 42: Steuereinrichtung
- 44: elektronisches Stabilitätsprogramm

## Patentansprüche

1. Bremssystem (20) für ein Kraftfahrzeug (10), wobei das Bremssystem (20) zwei Steuereinheiten (27, 28) umfasst, die jeweils dazu ausgelegt sind, einen jeweiligen Bremskreis (30, 31) des Bremssystems (20) anzusteuern, der zwei der vier Betriebsbremsen (21, 22, 23, 24) und eine der zwei elektrischen Feststellbremsen (25, 26) umfasst,
**dadurch gekennzeichnet, dass**
bei einem Defekt in einem der Bremskreise die Steuereinheit (27, 28) des anderen Bremskreises dazu ausgelegt ist, mittels Ansteuerns der jeweiligen Bremsen (21, 22, 23, 24, 25, 26) dieses anderen Bremskreises
- eine Gespannstabilisierung eines Gespanns, umfassend das Kraftfahrzeug (10) und einen mit dem Kraftfahrzeug (10) gekoppelten Anhänger (12), durchzuführen; und/oder
- das Kraftfahrzeug (10) bei einem Defekt an einer Lenkung (40) des Kraftfahrzeugs (10) in Abhängigkeit von einem Lenkbefehl einer Steuereinrichtung (42) zum autonomen Fahren zu lenken.

2. Bremssystem (20) nach dem vorhergehenden Anspruch,
**dadurch gekennzeichnet, dass**
die Steuereinheit (27, 28) des anderen Bremskreises (30, 31) dazu ausgelegt ist, die jeweiligen Betriebsbremsen (21, 22, 23, 24) und die jeweilige elektrische Feststellbremse (25, 26) in Abhängigkeit von einem Steuerbefehl eines elektronischen Stabilitätsprogramms (44) des Kraftfahrzeugs (10) anzusteuern.

3. Kraftfahrzeug (10) mit einem Bremssystem (20) nach einem der vorhergehenden Ansprüche.

4. Kraftfahrzeug (10) nach Anspruch 3
**dadurch gekennzeichnet, dass**
das Kraftfahrzeug (10) zum autonomen Fahren ausgelegt ist und dafür eine Steuereinrichtung (42) zum autonomen Fahren aufweist, die zumindest dazu ausgelegt ist, mittels eines Lenkbefehls eine Lenkung (40) des Kraftfahrzeugs (10) anzusteuern.

5. Kraftfahrzeug (10) nach einem der Ansprüche 3 oder 4
**dadurch gekennzeichnet, dass**
das Kraftfahrzeug (10) an einer lenkbaren Vorderachse (16) des Kraftfahrzeugs (10) einen positiven Lenkrollradius aufweist.

6. Verfahren zum Betreiben eines Bremssystems (20) nach einem der Ansprüche 1 oder 2, wobei, falls einer der zwei Bremskreise einen Defekt aufweist, die Steuereinheit (27, 28) des jeweiligen anderen Bremskreises die jeweiligen Bremsen (21, 22, 23, 24, 25, 26) dieses anderen Bremskreises ansteuert, wobei
- eine Gespannstabilisierung eines Gespanns umfassend das Kraftfahrzeug (10) und einen mit dem Kraftfahrzeug (10) gekoppelten Anhänger (12) durchgeführt wird; und/oder
- das Kraftfahrzeug (10) bei einem Defekt an einer Lenkung (40) des Kraftfahrzeugs (10) in Abhängigkeit von einem Lenkbefehl einer Steuereinrichtung (42) zum autonomen Fahren gelenkt wird.
